# EUROPÄISCHE PATENTSCHRIFT

(11) **EP 0 733 299 B1**
(45) Veröffentlichungstag und Bekanntmachung des Hinweises auf die Patenterteilung: **10.09.1997**
(21) Anmeldenummer: 95902750.9
(22) Anmeldetag: 30.11.1994
(51) Int. Cl.: H05B 7/12, F27B 3/08

(54) **ELEKTROREDUKTIONSOFEN MIT VERTIKAL BEWEGBAREM RAHMEN**
SUBMERGED ARC FURNACE WITH VERTICALLY MOVABLE FRAME
FOUR A ARC SUBMERGE A CADRE MOBILE EN HAUTEUR

(30) Priorität: 08.12.1993 DE 4342511
(43) Veröffentlichungstag der Anmeldung: 25.09.1996
(73) Patentinhaber: MANNESMANN Aktiengesellschaft, 40213 Düsseldorf (DE)
(72) Erfinder: AMBROSI, Luciano, D-47441 Moers (DE); SCHULZE-HAGEN, Franz, D-46535 Dinslaken (DE); CEPIN, Hermann, D-47057 Duisburg (DE)
(74) Vertreter: Meissner, Peter E., Dipl.-Ing.
(86) Internationale Anmeldenummer: DE9401469
(87) Internationale Veröffentlichungsnummer: WO9516335

(56) Entgegenhaltungen:
- CH-A- 288 015
- DE-A- 1 440 991
- DE-B- 1 026 017
- FR-A- 2 254 172
- FR-A- 2 683 421

## Beschreibung

Die Erfindung betrifft einen Elektroreduktionsofen mit offenem Schlackebad, insbesondere für das Einschmelzen von staubförmigem Möller, mit einem oberhalb des mit einem Deckel verschlossenen Ofens angeordneten vertikal bewegbaren Rahmen, an dem eine elektrodenfassung sowie eine Elektrodennachsetzeinrichtung angeordnet ist.

Elektroden in Reduktionsöfen verbrauchen sich an der Elektrodenspitze und müssen während des Betriebes nachgesetzt werden. Eine solche Nachsetzvorrichtung der Elektroden elektrischer Öfen mit einem aus Kolbenzylinder bestehenden doppelwirkenden Druckmittelantrieb zum Durchdrücken der Elektrode durch die Kontaktfassung ist beispielsweise aus der DE AS 1 440 991 bekannt. Die aus dieser Schrift bekannte Nachsetzvorrichtung wie auch die Elektrodenfassung sind an einem Rahmen befestigt, der von einer Elektrodenwinde betragen wird. In dieser Schrift werden Mittel aufgezeigt, mit denen ein stoßfreies und geschwindigkeitsreguliegendes Nachsetzen der einzelnen Elektroden durch die Elektrodenfassung während der ganzen Senkoperation gleichmäßig durchgeführt werden kann. Ein gleichzeitiges geregeltes Absenken der Elektroden ist ebensowenig entnehmbar wie ein sicheres Abdichten der Elektrodendurchtritte durch den Deckel.
Aus der Schrift EP 0 093 070 B1 ist ein Dichtungssystem für Elektroden bekannt, bei dem eine ringförmige Stopfbüchse an den Außenmantel der Elektrode gepresst wird. Darüber hinaus ist eine die Elektrode umgreifende Kammer vorgesehen, die mit Druckluft beaufschlagbar ist. Der gesamte Dichtring ist am Ofendeckel festgeschraubt und somit von diesem nicht Leicht lösbar.
Aus der Schrift DE OS 24 55 202 ist eine Hauptringdichtung zur verwendung in Verbindung mit einem Lichtbogenofen bekannt, der eine Ofendecke aus Feuerfest-Material aufweist, in der mit übermaß ausgefüllte Öffnungen vorgesehen sind, wobei die Hauptringdichtung über und unabhängig von der feuerfesten Ofendecke mit einer Tragkonstruktion abgestützt ist. Hierzu werden schwenkbare Verbindungsglieder eingesetzt, welche eine seitliche Bewegung und versetzung der Hauptringdichtung gegenüber der Ofendecke zulassen. Darüber hinaus ist die Hauptringdichtung zu der Ofendecke mit einem verstellbaren zylindrisch ausgebildeten Teil abdichtbar. Auf dem Deckel ist eine ringförmige Deckendichtung vorgesehen, die so bemessen ist, daß sie sich gegenüber dem unteren zylindrischen Teil bei enger Anlage teleskopartig verschieben läßt, wobei die Anlage durch ein elastisches Element weiter verbessert wird. Diese komplizierte Konstruktion läßt nur einen aufwendigen Deckelwechsel zu.
Die Erfindung verfolgt das Ziel, mit einfachen konstruktiven Mitteln einen gattungsgemäßen Elektroreduktionsofen zu schaffen, die ein sicheres Steuern der Elektrodenbewegung gewährleisten und mit denen instandhaltunsfreundlich eine Erhöhung der Betriebsbenutzungszeit sich erreichen läßt.
Die Erfindung erreicht dieses Ziel durch die kennzeichnenden Merkmale des Anspruchs 1 und des Anspruchs 7.

Die Erfindung erreicht dieses Ziel durch die kennzeichnenden Merkmale des Anspruchs 1.
Erfindungsgemäß wird vorgeschlagen, an den Rahmen, an den die Elektrodenfassung sowie die Nachsetzeinrichtung befestigt ist, Kolbenzylinder anzuschließen, welche sich an einer ortsfesten Regulierbühne abstützen.
Mit dem Bewegen dieses Rahmens werden die Elektroden, in der Regel werden 3 Stück eingesetzt, gleichzeitig bewegt. Das Nachsetzen und Nachfassen jeder Einzelelektrode wird mit den Klemmringen in Kombination mit der Fassung bewerkstelligt.
Das gleichzeitige Regeln aller drei Elektroden ist möglich bei Elektroreduktionsöfen, die mit offenem Schlackebad arbeiten. Solche Öfen werden eingesetzt bei der Verarbeitung von Stäuben oder ähnlichen Rohstoffen. Hierbei wird der staubförmige Möller vorzugsweise über Hohlelektroden beschickt. Das restliche Beschickungsgut, überwiegend Koks und Zuschläge, wird über Beschickungsrohre auf die heiße, flüssige Schlacke chargiert und schwimmt auf der Schlacke. Die Schlacken- und Mölleroberfläche weist dabei keine nennenswerte Unebenheit auf.

Die Elektrodendurchführungen durch den Ofendeckel lassen sich staubdicht oder auch gasdicht ausführen. Ein besonderes Problem stellt hierbei die thermische Verformung des Deckels dar. Die Erfinder schlagen daher vor, während des Betriebes des Elektroreduktionsofens auf den Rand der Deckelöffnung eine Dichtung einzusetzen, die mit einer konstanten Kraft beliebige Bewegungen parallel zur Elektrodenachse aufnimmt und die Deckelöffnung vertikal sicher verschließt.

Die Deckel sind regelmäßig ausgemauert und unterliegen einem nicht kalkulierbaren Verschleiß. Dies hat zur Folge, daß sie spontan ausgewechselt werden müssen. Bei der erfindungsgemäßen Ausführung der Dichtung der Elektrodendurchführung ist das in einfacher Weise und in kürzester Zeit möglich. Hierzu werden die an der Wartungsbühne befestigten Anpresszylinder zurückgefahren, wobei die Dichtung vom Ofendeckel gelöst wird. Gleichzeitig werden die Elektroden aus der Elektrodendurchführung herausgefahren. Anschließend läßt sich der freie Deckel mit einfachen Mitteln entfernen und ein bereitgestellter überholter Deckel in einfacher Weise wiederum auf den Ofen aufsetzen. Anschließend werden die Elektrodendurchführungen wieder geschlossen, die Elektroden werden in Arbeitspositionen gebracht und die Produktion kann wieder aufgenommen werden.

In einer besonderen Ausgestaltung wird jede Elektrode im Bereich der Dichtungseinheit mit einer Dichthülse umgeben, die vom Dichtungsrahmen umgriffen wird. Die Außenmantelfläche der Dichthülse ist mechanisch bearbeitet, so daß sie leicht und ohne undicht zu werden im Dichtringrahmen gleiten kann. Beim geplanten Deckelwechsel wird jetzt die Elektrode in die Dichthülse hineingezogen und beide soweit vertikal bewegt, daß ihre Spitzen oberhalb der horizontalen Fläche des Dichtflansches sich befinden. Anschließend wird durch Betätigen der Kolbenzylindereinheit die Dichtungseinheit soweit angehoben, daß der Deckel horizontal frei darunter bewegt werden kann.

Die die Elektrode umgreifenden Fassungsringe sind einteilig ausgeführt mit dem Vorteil des Einhaltens der exakten Form und des geringen Verschleisses. Die Ringe sind isoliert aufgehängt; hierdurch werden Stromverluste vermieden und sicherheitstechnische Aspekte beim Begehen des Rahmens eingehalten.
Insgesamt ist die Stromzuführung in ihrer Länge minimiert worden. Dies wird u.a. auch erreicht durch Einsatz des Rahmens und Wegfalls besonderer Ausleger, da der Schwerpunkt des Stranges, einschließlich der Elektroden, tiefer liegt als beim herkömmlichen Design.

Durch die an zwei Stellen der Elektrode angreifenden Halterung, nämlich der Elektrodenfassung und der Nachsetzeinrichtung, und gleichzeitigen Bewegung aller Elektroden in vertikaler Richtung, sind die Elektroden frei von Seitenkräften.

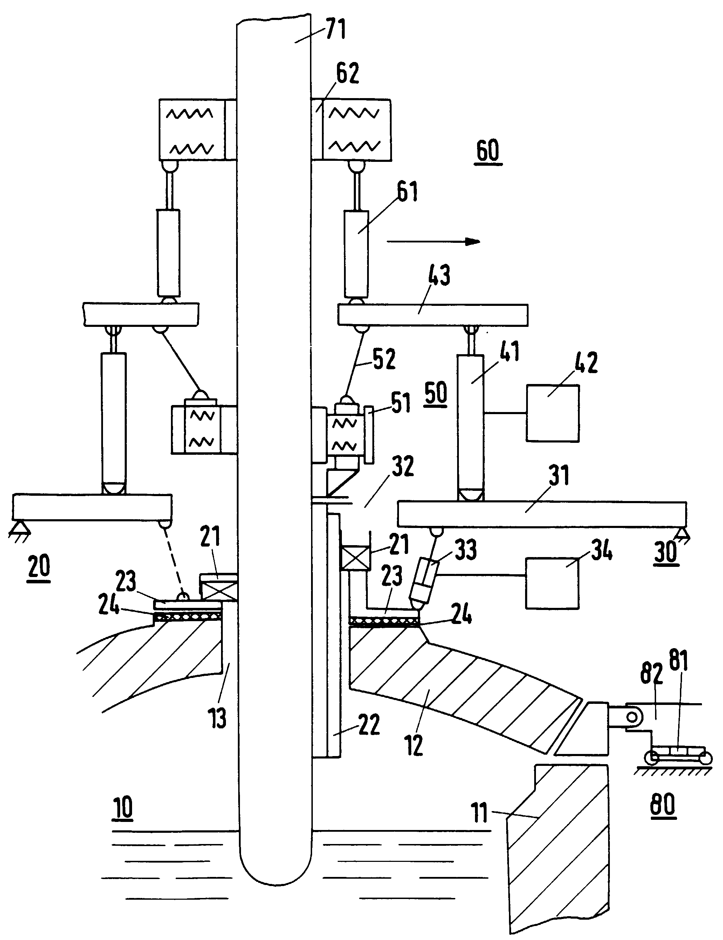

Ein Beispiel der Erfindung ist in der beigefügten Zeichnung dargelegt. Dabei zeigt die einzige Figur einen Ausschnitt eines Elektroreduktionsofens mit Deckelabschnitt.
Dabei ist ein Gefäß 11 mit einem Deckel 12 eines Elektroreduktionsofens 10 dargestellt. Durch eine Deckelöffnung 13 ragen eine Elektrode 71 in das Gefäß 11 hinein.

Die Elektrode 71 wird von einem Klemmring 62 einer Nachsetzeinrichtung 60 gefaßt, die sich über einen Hubzylinder 61 auf einem Rahmen 43 abstützt.
Am Rahmen 43 ist eine Elektrodenfassungshaltung 52 befestigt, an der ein Elektrodenfassungsring 51, der die Elektrode 71 ebenfalls umgreift, angeordnet ist.

Der Rahmen 43 stützt sich über einen Regulierzylinder 41, der mit einer Gleichlaufsteuerung 42 in verbindung steht, auf einer Regulier- und Wartungsbühne 31 einer Wartungseinheit 30 ab. Die Regulier- und Wartungsbühne 31 weist dabei einen Durchtritt 32 auf, in dessen Bereich eine Kolbenzylindereinheit 33, die an eine Steuereinheit 34 angeschlossen ist, befestigt ist.

Die Kolbenzylindereinheit 33 steht mit einer Dichtungseinheit 20 in Verbindung. Diese Dichtungseinheit 20 weist einen parallel zur Deckelöffnung 13 geführten Flansch 23 auf, wobei zwischen beiden elastisch verformbares Material 24 vorgesehen ist. Einsetzbar ist hier warmfeste Siliconmasse over ein metallischer Kompensator.
Der Flansch steht mit einem Dichtungsrahmen in Verbindung, der die Elektrode unmittelbar - wie in der linken Seite der Figur dargestelltoder eine Dichthülse 22 umgreift. Der Einsatz einer Dichthülse 22 hat den Vorteil, daß hier durch mechanische Bearbeitung der Außenmantelfläche definierte Verhältnisse der Berühungsflächen geschaffen werden. Somit wird ein dichtes und sicheres Gleiten der Elektrodeneinheit während der geplanten Deckelwechselungen gewährleistet.
Beim Deckewechsel kommt eine Hebe- und Fahreinheit 80 zum Einsatz, die ein Hebeelement 81 sowie ein Fahrelement 82 aufweist und nach Lösen des Flanschen 23 von der Deckelöffnung und des Zurückziehens der Elektrode und ggfs. der Dichthülse der Deckel ohne Behinderung vom Gefäß 11 wegbewegt.

### Positionsliste:

- 10: Elektroreduktionsofen
- 11: Gefäß
- 12: Deckel
- 13: Deckelöffnung
- 20: Dichtungseinheit
- 21: Dichtungsrahmen
- 22: Dichtshülse
- 23: Flansch
- 24: elastisch verformbares Material
- 30: Wartungseinrichtung
- 31: Regulier- und Wartungsbühne
- 32: Durchtritt
- 33: Kolbenzylindereinheit
- 34: Steuereinheit
- 41: Regulierzylinder
- 42: Gleichlaufsteuerung
- 43: Rahmen
- 50: Elektrodenfassungseinrichtung
- 51: Elektrodenfassungsring
- 52: Elektrodenfassungshalterung
- 60: Nachsetzeinrichtung
- 61: Hubzylinder
- 62: Klemmring
- 71-73: Elektroden
- 80: Hebe-und Fahreinheit
- 81: Hebeelement
- 82: Fahrelement

## Patentansprüche

1. Elektro-Reduktionsofen mit offenem Schlackebad, insbesondere für das Einschmelzen von staubförmigem und feinkörnigem Möller, mit einem oberhalb des mit einem Deckel (12) verschlossenen Ofens angeordneten vertikal bewegbaren Rahmen (43), an dem eine Elektrodenfassung (50) sowie eine Elektrodennachsetzeinrichtung (60) angeordnet ist,
dadurch gekennzeichnet,
daß eine Bühne (31) vorgesehen ist, an der sich der Rahmen (43) über mindestens drei Regulierzylinder (41) abstützt, und daß die Bühne (31) oberhalb des Ofendeckels (12) angeordnet als Wartungsbühne ausgestaltet ist, an der je Elektrode (71-73) eine Dichtungseinheit (20) vorgesehen ist, die Bauteile (21,23) zur horizontalen und vertikalen Abdichtung der freien Flächen zwischen Elektroden und den Elektrodendurchtrittsöffnungen (13) des Deckels (12) aufweist.

2. Elektroreduktionsofen nach Anspruch 1,
dadurch gekennzeichnet,
daß die Regulierzylinder (41) mit einer Gleichlaufsteuerung (42) ausgerüstet sind.

3. Elektroreduktionsofen nach Anspruch 1,
dadurch gekennzeichnet,
daß eines der Bauteil der Dichtungseinheit (20) ein Dichtungsrahmen (21) ist, der die einzelnen Elektroden (71,73) als geschlossener Ring umgreift.

4. Elektroreduktionsofen nach Anspruch 3
dadurch gekennzeichnet,
daß zwischen jedem Dichtungsrahmen (21) und der einzelnen Elektrode (71-73) koaxial zu diesen eine Dichthülse (22) vorgesehen ist, deren Außenmantelfläche mechanisch bearbeitet und gegen die Innenflächen des Dichtungsrahmens (21) gleitend anlegbar ist.

5. Elektroreduktionsofen nach Anspruch 3,
dadurch gekennzeichnet,
daß am Dichtungsrahmen (21) ein Flansch (23) vorgesehen ist, der parallel zum Deckel (12) geführt und sich über ein Dichtmittel (24) gegen den Rand der Deckelöffnung (13) lehnt.

6. Elektroreduktionsofen nach Anspruch 5,
dadurch gekennzeichnet,
daß das Dichtmittel (24) aus elastisch verformbarem Dichtmaterial z.B. Siliconmasse besteht.

7. Elektroreduktionsofen mit einer Einrichtung zur
Abdichtung der Elektrodendurchtrittsöffnungen im Deckel (12), dadurch gekennzeichnet,
daß eine an eine Steuereinheit (34) angeschlossene Kolbenzylindereinheit (33) vorgesehen ist, die an der Bühne (31) aufgehängt mit einem die Einzelelektroden (71-73) umgreifenden Dichtungsrahmen (21) zur horizontalen Abdichtung und mit diesem verbundenen parallel zur Deckelöffnung (13) angeordneten Flansch (23) zur vertikalen Abdichtung verbunden ist, mit der bei wechselnder Höhe (H) des Randes der Deckelöffnung (13) während des Betriebes des Elektroreduktionsofens eine konstante Kraft auf die vertikale Dichtung ausübbar ist.

8. Elektroreduktionsofen nach Anspruch 7,
dadurch gekennzeichnet,
daß mit der Kolbenzylindereinheit (33) bei Ofenstillstand der zur vertikalen Abdichtung vorgesehene Flansch (23) von dem Rand der Deckelöffnung (13) abhebbar ist.

9. Elektroreduktionsofen nach einem der vorgenannten Ansprüche,
dadurch gekennzeichnet,
daß der Ofendeckel (12) an eine Hebe- und Fahreinheit (80) ankuppelbar ist, mit der der Deckel (12) bei abgehobenem Flansch (23) in eine Reparaturposition außerhalb des Ofengefäßes (11) bringbar ist.

## Claims

1. An electric reduction furnace with an open slag bath, in particular for melting down dust-like and fine-grained burden, having a vertically movable frame (43) arranged above the furnace closed by a cover (12), on which frame an electrode mounting (50) and an electrode resetting means (60) are arranged, characterised in that a platform (31) is provided on which the frame (43) is supported by means of at least three regulating cylinders (41), and that the platform (31) arranged above the furnace cover (12) is designed as a maintenance platform, on which one sealing unit (20) per electrode (71-73) is provided, which unit has components (21, 23) for horizontally and vertically sealing the free surfaces between the electrodes and the electrode passage openings (13) in the cover (12).

2. An electric reduction furnace according to Claim 1, characterised in that the regulating cylinders (41) are equipped with a synchronisation control (42).

3. An electric reduction furnace according to Claim 1, characterised in that one of the components of the sealing unit (20) is a sealing frame (21) which surrounds the individual electrodes (71, 73) as a closed ring.

4. An electric reduction furnace according to Claim 3, characterised in that a sealing sleeve (22) is provided between each sealing frame (21) and the individual electrode (71-73) coaxially thereto, the outer casing surface of which sleeve is machined and can be placed slidingly against the inner surfaces of the sealing frame (21).

5. An electric reduction furnace according to Claim 3, characterised in that a flange (23) is provided on the sealing frame (21), which flange is guided parallel to the cover (12) and rests against the edge of the cover opening (13) via a sealing means (24).

6. An electric reduction furnace according to Claim 5, characterised in that the sealing means (24) consists of elastically deformable sealing material, e.g. silicone material.

7. An electric reduction furnace with a means for sealing the electrode passage openings in the cover (12), characterised in that a piston-cylinder unit (33) connected to a control unit (34) is provided, which piston-cylinder unit is suspended on the platform (31) and connected to a sealing frame (21) surrounding the individual electrodes (71-73) for horizontal sealing and a flange (23) connected thereto and arranged parallel to the cover opening (13) for vertical sealing, with which piston-cylinder unit a constant force can be exerted on the vertical seal during the operation of the electric reduction furnace for changing heights (H) of the edge of the cover opening (13).

8. An electric reduction furnace according to Claim 7, characterised in that the flange (23) provided for vertical sealing can be lifted off from the edge of the cover opening (13) with the piston-cylinder unit (33) when the furnace is shut down.

9. An electric reduction furnace according to one of the preceding claims, characterised in that the furnace cover (12) can be coupled to a lifting and driving unit (80) by means of which the cover (12) can be brought into a repair position outside the furnace vessel (11) when the flange (23) is lifted off.

## Revendications

1. Four de réduction électrique, comportant un bain de laitier ouvert, en particulier pour fondre des minerais et fondants pulvérulents et à grains fins, un bâti (43) verticalement mobile agencé au-dessus du four fermé par un couvercle (12), bâti sur lequel sont agencés un châssis d'électrode (50), ainsi qu'un dispositif de recharge d'électrode (60),
caractérisé en ce qu'il est prévu une plate-forme (31) sur laquelle s'appuie le bâti (43) par l'intermédiaire d'au moins trois vérins de réglage (41), et en ce que la plate-forme (31), agencée au-dessus du couvercle du four (12), est réalisée comme plate-forme de maintenance, sur l'électrode respective (71-73), étant prévue une unité d'étanchéité (20) qui présente des pièces (21, 23) pour l'étanchéification horizontale et verticale des surfaces libres entre les électrodes et des ouvertures de passage d'électrode (13) du couvercle (12).

2. Four de réduction électrique selon la revendication 1,
caractérisé en ce que les vérins de réglage (41) sont équipés d'une commande de synchronisation (42).

3. Four de réduction électrique selon la revendication 2,
caractérisé en ce qu'une des pièces de l'unité d'étanchéité (20) est un cadre d'étanchéité (21) qui entoure les électrodes individuelles (71-73) comme une bague fermée.

4. Four de réduction électrique selon la revendication 3,
caractérisé en ce que, entre chaque cadre d'étanchéité (21) et les électrodes individuelles (71-73), il est prévu, coaxialement à celles-ci, un manchon étanche (22), dont la surface d'enveloppe externe est usinée mécaniquement et peut être appliquée, en glissant, contre les surfaces internes du cadre d'étanchéité (21).

5. Four de réduction électrique selon la revendication 3,
caractérisé en ce que, sur le cadre d'étanchéité (21), il est prévu une bride (23), qui est guidée parallèlement au couvercle (12) et s'appuie, par l'intermédiaire d'un moyen étanche (24), contre le bord de l'ouverture (13) du couvercle.

6. Four de réduction électrique selon la revendication 5,
caractérisé en ce que le moyen d'étanchéité (24) est constitué d'une matière étanche élastiquement déformable, par exemple une masse de silicone.

7. Four de réduction électrique, comportant un dispositif pour étanchéifier les ouvertures de passage d'électrode dans le couvercle (12),
caractérisé en ce qu'il est prévu un vérin (33) raccordé à l'unité de commande (34), qui, suspendu à la plate-forme (31), est relié à un cadre d'étanchéité (21) entourant les électrodes individuelles (71-73) pour l'étanchéification horizontale et à une bride (23) agencée parallèlement à l'ouverture (13) du couvercle, reliée à celui-ci, pour l'étanchéification verticale, grâce à quoi, lorsque la hauteur (H) du bord de l'ouverture (13) du couvercle change pendant le fonctionnement du four de réduction électrique, une force constante peut être exercée sur l'étanchéification verticale.

8. Four de réduction électrique selon la revendication 7,
caractérisé en ce que la bride (23) prévue pour l'étanchéification verticale peut être soulevée du bord de l'ouverture (13) du couvercle, par le vérin (33), lorsque le four est à l'arrêt.

9. Four de réduction électrique selon une des revendications précédentes,
caractérisé en ce que le couvercle du four (12) peut être couplé à une unité de levage et de déplacement (80), grâce à laquelle le couvercle (12), lorsque la bride (23) est soulevée, peut être amené dans une position de réparation à l'extérieur du récipient de four (11).
